# EUROPEAN PATENT SPECIFICATION

(11) **EP 2 822 777 B1**
(45) Date of publication and mention of the grant of the patent: **11.10.2017**
(21) Application number: 13757848.0
(22) Date of filing: 06.03.2013
(51) Int. Cl.: B41M 7/00, B41F 23/04, B41F 23/08, B41J 11/00

(54) **MULTI-LAYER PRINTING PROCESS**
MEHRSCHICHTIGES DRUCKVERFAHREN
PROCESSUS D'IMPRESSION MULTICOUCHE

(30) Priority: 06.03.2012 US 201261607080 P
(43) Date of publication of application: 14.01.2015
(73) Proprietor: Amcor Group GmbH, 8050 Zurich (CH)
(72) Inventor: WITTMANN, Alain, 4665 Oftringen (CH); PERRY, Ron, Thomaston, Georgia 30286 (US)
(74) Representative: Cronin, Brian Harold John
(86) International application number: PCT/US2013/029313
(87) International publication number: WO 2013/134359

(56) References cited:
- WO-A1-01/07175
- WO-A1-2012/099698
- WO-A2-2007/033031
- CN-A- 101 973 170
- US-A- 5 985 376
- US-A1- 2005 109 227
- US-A1- 2005 150 592
- US-A1- 2007 068 404
- US-A1- 2010 090 455
- US-A1- 2011 073 356

## Description

### FIELD

The present disclosure relates to multi-layer printing processes and, more particularly, relates to a multi-layer printing processes that employ an energy curable coating that provides advantages over conventional hot/cold foil stamping.

### BACKGROUND

In the printing and/or manufacturing industries, it is often desirable to print or otherwise apply indicia to a product container or other packaging. Traditionally, selection of the application process would revolve around the physical characteristics of the final indicia. In some applications, durability of the indicia was paramount (e.g. resistance to scuffing or damage). In some applications, appearance of the indicia was paramount (e.g. reflectivity). In some applications, durability, appearance, and/or other characteristics were desirable.

Conventionally, foil stamping, also known as hot foil stamping, hot stamping, dry stamping, cold foil imprinting, and leaf imprinting, was used to achieve a desired appearance in the final product. Generally speaking, hot stamping is a dry printing method in which a heated die and foil are used to apply graphics to a target surface. The process of hot stamping generally comprises heating a die defining a desired shape for the transfer, applying a metallic foil over the target surface, and, through a combination of heat, dwell time, and pressure, a partial transfer of the metallic foil, in the shape of the die, is transferred and bonded to the target surface.

Hot/cold foil stamping is often desirable because of it being a dry process that does not employ solvents or inks, and does not typically result in harmful vapors.

However, the quality of the foil stamping process is highly dependent on the quality of the fixture or anvil used to support the part to be printed. That is, the fixture must be supportive to reliably and repeatably position the part to be printed. Variation in either may compromise the quality of the stamping process.

It should be recognized that conventional foil stamping often requires substantial investment in machinery that is both cumbersome and costly.

Rotary hot/cold foil stamping can improve the processing rate of conventional foil stamping as it reduces the dwell time. This can, in turn, improve the resultant detail of the indicia. However, use of the rotary hot foil stamping system can be challenging in terms of trying to maintain the desired temperature of the die. In all cases, the die must be held securely in position in order to produce even depth of impression through heavy and light coverage regions of the die.

Unfortunately, there are limits to the complexity of foil stamping indicia. For example, foil stamping can be limited to specific surface topography. Moreover, foil stamping can be costly compared to ink printing.

Conventional ink printing however, generally requires application of a printing ink on to the target surface and then is typically followed with application of a lacquer or other protective layer to enhance the appearance of the indicia (e.g. reflectivity) and protect the indicia. Unfortunately, conventional ink printing is not able to achieve the ultimate appearance of foil stamping; that is, conventional ink printing cannot generally achieve the reflectivity of foil printing.

WO 2007/033031 discloses a metallic ink jet printing system for graphics applications comprising a plurality of stations for carrying out different operations like applying an energy-curable undercoat, curing and applying a metallic ink.

WO 01/07175 discloses a method of providing a metallic appearance from printing with a metallic ink optionally with thereunder a UV cured liquid composition applied in particular by pressure transfer printing, inkjet printing and lithographic printing.

US 2010/0090455 discloses a method of providing printed products with optically variable images applied to a substrate, such as a hologram, kinegram and the like where metallic ink is printed onto the hologram or the like embedded in a UV-cured coating.

### SUMMARY

In accordance with the present teachings, a novel multi-layer ink printing process is provided that overcomes the deficiencies of the conventional ink printing and is capable of at least matching, and in some embodiments surpassing, the appearance and durability of foil stamping.

According to a main aspect of the invention, there is provided a process for forming a printed product, said process comprising
applying an energy curable coating to a substrate at a first station using a printing process, said energy curable coating comprising an acrylate material that cures by free radical polymerization;
curing said energy curable coating using an energy curable process including free radical polymerization at a second station downstream of said first station to define a cured energy curable layer;
routing said substrate to a third station downstream of said second station. and
applying a metallic ink directly to the intact surface of said cured energy curable layer which consists of the cured energy curable coating, to define a metallic ink layer on the cured energy curable layer, wherein.
applying said energy curable coating to said substrate at said first station comprises applying said energy curable coating to said substrate at said first station using a gravure cylinder having indicia grooves formed on said gravure cylinder, said indicia grooves being adapted to retain said energy curable coating until contact with said substrate whereby said energy curable coating is applied to said substrate.

The method optionally further comprises applying an overcoat layer to said substrate at a fourth station, said overcoat layer being applied over said metallic ink layer.

According to another main aspect of the invention, there is provided a system for forming an indicia on a substrate, said system comprising:
a feed system for feeding said substrate;
a plurality of stations each operable to apply a processing step to said substrate, a first of said plurality of stations configured to apply an energy curable coating to said substrate using a printing process, said energy curable coating comprising an acrylate material that cures by free radical polymerization;
a curing unit disposed downstream of said first station, said curing unit receiving said substrate and outputting an energy beam directed toward said energy curable coating to cure said energy curable coating by a free radical polymerization process and form a resultant energy cured layer upon said substrate; and
a second station of said plurality of stations configured to apply a metallic ink directly to the intact said energy cured layer which consists of the cured energy curable coating, to define a metallic ink layer on the cured energy curable layer, the curing unit being between the first station and the second station, wherein:
   the first of said plurality of stations is configured to apply said energy curable coating to said substrate with a gravure cylinder having an indicia depression formed on said gravure cylinder, said indicia depression being adapted to retain said energy curable coating until contact with said substrate whereby said energy curable coating is applied to said substrate.

Optionally, there is a third station of said plurality of stations that is configured to apply an overcoat to said substrate over said metallic ink and said energy cured layer.

Further areas of applicability will become apparent from the description provided herein. The description and specific examples in this summary are intended for purposes of illustration.

### DRAWINGS

The drawings described herein are for illustrative purposes only of selected embodiments:
FIG. 1 is a schematic view illustration of a printing system according to some embodiments of the present teachings;
FIG. 2A is a schematic cross-sectional view illustrating a product made in accordance with the multi-layer printing process of the present teachings according to some embodiments;
FIG. 2B is a schematic cross-sectional view illustrating a product made in accordance with the multi-layer printing process of the present teachings according to some embodiments; and
FIG. 3 is a schematic cross-sectional view illustrating a conventional foil stamping product.

Corresponding reference numerals indicate corresponding parts throughout the several views of the drawings.

### DETAILED DESCRIPTION

Example embodiments will now be described more fully with reference to the accompanying drawings. Numerous specific details are set forth such as examples of specific components, devices, and methods, to provide a thorough understanding of embodiments of the present invention. It will be apparent to those skilled in the art that specific details need not be employed, that example embodiments may be embodied in many different forms and that neither should be construed to limit the scope of the claims. In some example embodiments, well-known processes, well-known device structures, and well-known technologies are not described in detail.

The terminology used herein is for the purpose of describing particular example embodiments only and is not intended to be limiting.

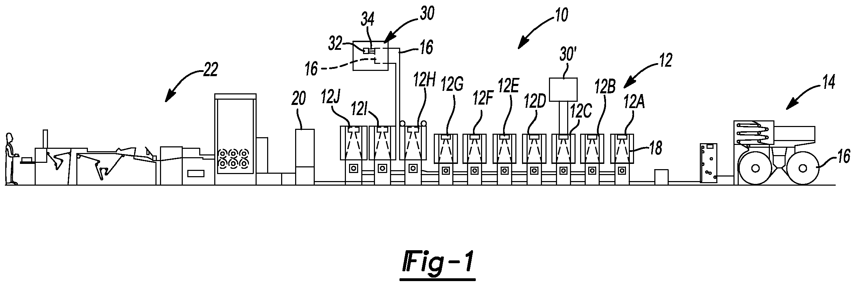

With particular reference to FIG. 1, a printing system 10 is provided according to the principles of the present teachings. The printing system 10 is based on a rotogravure (also known as a gravure) printing system. The system is generally an intaglio-type printing system that involves engraving the image onto an image carrier. In gravure printing, the image is engraved onto a cylinder for use in a rotary printing press configuration.

Generally speaking, the gravure process system is configured by first creating one or more cylinders with an engraved image to be printed. Engraving of the image on the cylinder can be accomplished according to any one of a number of techniques, including physical engraving (e.g. via a diamond stylus), etching (e.g. chemical etching), and the like. This engraved image is sized to contain the printing ink to be transferred to the substrate. In some embodiments, the substrate can comprise paper or other fibrous material, such as stock, cardboard, corrugated board, polyethylene, polypropylene, polyester, BOPP and the like. It should be noted, however, that alternative substrate materials can be used that are conventional in the art. As noted above, the invention is particularly advantageous for fibrous substrates such as paper or board that present a relatively rough surface. Boards usable in the invention typically have a grammage from about 160 g/m² to about 400 g/m², often in the range 180 to 280 g/m². This corresponds to a thickness in the range of about 180 to 400µ depending on the density of the board material. Paper substrates range typically from about 80 g/m² to about 160 g/m².

Generally, printing system 10 can comprise a plurality of stations 12, such as a first station 12A, a second station 12B, a third station 12C, a fourth station 12D, a fifth station 12E, a sixth station 12F, a seventh station 12G, an eighth station 12H, a ninth station 12I, and a tenth station 12J. It should be appreciated that printing system 12 can be configured with fewer or greater number of stations; however, the present embodiment represents at least one preferred embodiment. In some embodiments, each of the plurality of stations 12 can be configured for a different purpose, such as application of an energy curable ink (which will be discussed more completely herein), a different color, a different coating, or the like. In this regard, any one of a number of layering and processing patterns can be achieved on the substrate.

In some embodiments, printing system 10 can comprise a feed system 14 for supplying and feeding a substrate to be printed or web 16, such as paper, stock, cardboard, corrugated board, polyethylene, polypropylene, polyester, BOPP and the like, to each of the plurality of stations 12. Each of the plurality of stations 12 can comprise a printing cylinder 18 disposed therein. However, it should be recognized that each of the illustrated stations 12 do not require the use of a printing cylinder 18 as such station may be used for alternative purposes in some embodiments.

In some embodiments, printing system 10 can further comprise an optional inspection station 20. Inspection station 20 can be disposed in a downstream position relative to the plurality of stations 12. Inspection station 20 can automatically check and/or continually check the quality, rate, and condition of the now-printed substrate 16 and the resultant indicia contained thereon. The now-printed substrate 16 can then be final processed and palletized, if desired, in finishing station 22. Finishing station 22 can accomplish any one of a number of processing functions, such as creasing, die cutting, palletizing, and the like.

The printing system 10 further comprises at least one curing station 30 for curing an energy curable ink deposited on substrate 16. According to some teachings of the present application, curing station 30 can comprise a beam unit 32 outputting an energy beam 34, such as an electron beam and/or an ultraviolet beam, directed at substrate 16. In some embodiments, a current can be placed across a filament causing electrons to be accelerated off the filament. These electrons can be used with an energy curable ink, such as an energy curable metallic ink, to cause free radical polymerization in the ink (herein referred to as EB curing). Beam unit 32 can comprise nitrogen to ensure the curing environment is inert, if desired. UV curing can also be under atmospheric condition. EB curing typically does not generate much heat and is therefore beneficial in many applications. However, as mentioned, UV curing can also be used in accordance with the present teachings, although they should not be regarded as obvious variants of each other as various technical and procedural differences exist between the two.

EB curing generally employs high-energy electrons. These electrons are generally not affected by the thickness of printing inks or the color of the ink. The electron beam 34 provides sufficient energy to cure thick coatings and/or pass through other substrates.

The energy curable ink of the present teachings is an acrylate material that cures by free radical polymerization. Therefore, unlike other curing systems, a photoinitiator is not required. The electron energy is sufficient to cause the acrylate materials to polymerize by opening the acrylate bonds to form free radicals. These radicals then attack the remaining acrylate bonds until the reaction reaches completion. The result is a cured layer upon the substrate that is durable and provides previously-unattained reflectivity and optical characteristics using an ink-type application.

### PROCESS

While the printing system 10 is in operation, the engraved cylinder 18 is partially immersed in the ink fountain, filling the recessed cells with energy curable ink, conventional ink, and/or the like. As the cylinder rotates, it draws ink out of the fountain with it. Acting as a squeegee, a doctor blade scrapes the cylinder before it makes contact with the substrate, removing excess ink from the non-printing (non-recessed) areas and leaving in the cells the right amount of ink required. Next, the substrate gets sandwiched between the impression roller and the gravure cylinder, thereby transferring the ink to the substrate. The purpose of the impression roller is to apply force, pressing the substrate onto the gravure cylinder, ensuring even and maximum coverage of the ink. The capillary action of the substrate and the pressure from impression rollers force the ink out of the cell cavity and transfer it to the substrate. The substrate can then proceed to a dryer to completely dry before application of the subsequent layer.

The substrate 16 can include application of the energy curable ink at one or more of the plurality of stations 12. For example, the eighth station 12H can include application of an energy curable ink to substrate 16. Substrate 16 can continue its downstream processing, and be directed to curing station 30 (procedurally between eighth station 12H and ninth station 12I, whereby beam unit 32 outputs electron beam 34 directed at the energy curable ink from station 12H. Application of electron beam 34 to energy curable ink on substrate 16 (the EB coating) causes curing of the ink by free radical polymerization. In some embodiments, several layers of coatings can be cured down to a single layer. As a result of this process, the energy curable ink is thus bonded or otherwise cured to substrate 16. It has been found that this process produces a resultant indicia (made from the now-cured energy curable ink) that can be tailored to provide any one of a number of reflectivity characteristics up to at least a mirror finish. In this way, the results of the present process are at least equivalent to foil stamping, but with additional flexibility. Moreover, the durability of the finish composition, in many applications, is sufficient so as to avoid the need for any additional layers or protective coatings, such as lacquer and the like.

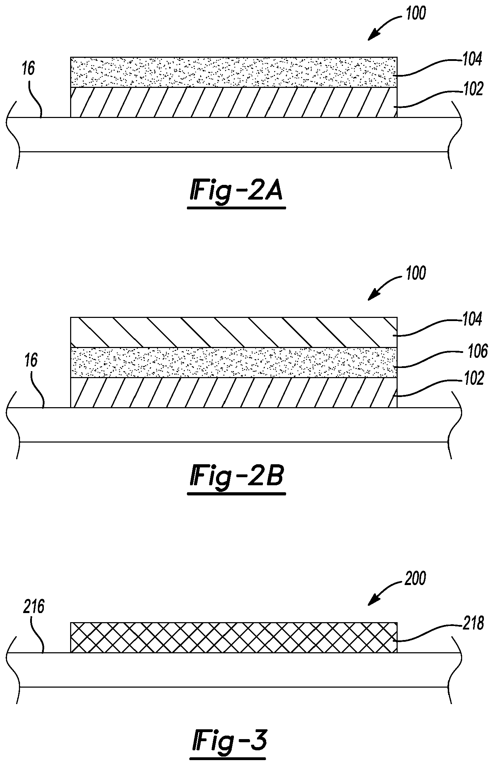

As a result of the aforementioned process, a product 100 is illustrated in FIG. 2A having a substrate 16, an energy cured layer 102, and an optional overcoat layer (e.g. lacquer) 104. As illustrated in FIG. 2B, product 100 comprises substrate 16, an energy cured layer 102, a metallic ink layer 106 applied above energy cured layer 102, and an optional overcoat layer 104 disposed above metallic ink layer 106. In contrast, a conventional foil stamped product 200 illustrated in FIG. 3 having a substrate 216 and a foil stamping 218.

A metallic ink layer 106 (FIG. 2B) is applied to the now-cured energy cured layer 102 to provide a high finish quality at station 12I or 12J. In some embodiments, the metallic ink used for metallic ink layer 106 can be conventional metallic ink that is available in an assortment of colors. It has been found that application of metallic ink layer 106 to the energy cured layer 102 creates a bond therebetween that results in increased durability of metallic ink layer 106 relative to conventional application of metallic ink layers. In some embodiments, an overcoat layer 104, which is discussed herein, may not be required to protect metallic ink layer 106. Moreover, the finish quality of the metallic ink layer 106 (being disposed upon energy cured layer 102) is enhanced (e.g. improved reflectivity) compared to metallic ink layers deposited directly on a substrate according to conventional processes.

In further embodiments, if desired, a lacquer or overcoat layer 104 can be applied to the now-cured energy cured layer 102 and metallic ink layer 106 to provide a high finish quality at station 12I or 12J and/or enhance durability. Notwithstanding, however, it has been found that because of the high finish quality provided by the now-cured energy cured layer 102 and metallic ink layer 106, application of this overcoat layer (see 104 of FIGS. 2A and 2B) is often not needed to enhance finish quality and, in some cases, application of this overcoat layer may in fact reduce the overall finish quality because of the high native quality of the energy cured layer 102. Moreover, in such applications that do not employ a lacquer or overcoat layer, the durability of the energy cured layer is often sufficient for many, if not all, applications.

Similar to curing station 30 positioned between stations 12H and 12I, a curing station 30', having a similar construction, can be positioned between any other of the plurality of stations 12, such as between third station 12C and fourth station 12D. In such embodiments, additional or alternative energy cured coating layers can be applied and subsequently cured in curing station 30'.

According to the present discussion, it should be appreciated that the principles of the present teachings provide benefits over conventional foil stamping processes and also over applications intended to achieve a simulated foil/metalized solution or foil/metalized alternative, such as transfer metalized board or vacuum metalized PET, laminated on board, and other techniques.

The foregoing description of the embodiments has been provided for purposes of illustration and description. It is not intended to be exhaustive. Individual elements or features of a particular embodiment are generally not limited to that particular embodiment, but, where applicable, are interchangeable and can be used in a selected embodiment, even if not specifically shown or described. Such variations and modifications of the described embodiments are intended to be included within the scope of the claims.

## Claims

1. A process for forming a printed product, said process comprising:
applying an energy curable coating to a substrate (16) at a first station (12) using a printing process, said energy curable coating comprising an acrylate material that cures by free radical polymerization;
curing said energy curable coating using an energy curable process including free radical polymerization at a second station (30) downstream of said first station to define a cured energy curable layer (102);
routing said substrate to a third station downstream of said second station; and
applying a metallic ink directly to the intact surface of said cured energy curable layer which consists of the cured energy curable coating, to define a metallic ink layer (106) on the cured energy curable layer,
**characterized in that**
said applying said energy curable coating to said substrate (16) at said first station (12) comprises applying said energy curable coating to said substrate at said first station using a gravure cylinder having indicia grooves formed on said gravure cylinder, said indicia grooves being adapted to retain said energy curable coating until contact with said substrate whereby said energy curable coating is applied to said substrate.

2. The process according to claim 1 further comprising applying an overcoat layer (104) to said substrate at a fourth station, said overcoat layer being applied over said metallic ink layer.

3. The process according to Claim 1 or 2 wherein said curing said energy curable coating using said energy curable process comprises curing said energy curable coating using an electron beam at said second station downstream of said first station to define said cured energy curable layer (102).

4. The process according to Claim 1 or 2 wherein said curing said energy curable coating using said energy curable process comprises curing said energy curable coating using an ultraviolet beam at said second station downstream of said first station to define said cured energy curable layer (102).

5. A system for forming an indicia on a substrate (16), said system comprising:
a feed system (14) for feeding said substrate;
a plurality of stations (12) each operable to apply a processing step to said substrate, a first of said plurality of stations configured to apply an energy curable coating to said substrate using a printing process, said energy curable coating comprising an acrylate material that cures by free radical polymerization;
a curing unit (30) disposed downstream of said first station, said curing unit receiving said substrate and outputting an energy beam (34) directed toward said energy curable coating to cure said energy curable coating by a free radical polymerization process and form a resultant energy cured layer (102) upon said substrate; and
a second station of said plurality of stations configured to apply a metallic ink directly to the intact surface of said energy cured layer (102) which consists of the cured energy curable coating, to define a metallic ink layer (106) on the cured energy curable layer, the curing unit (30) being between the first station and the second station,
**characterized in that**
said first of said plurality of stations (12) is configured to apply said energy curable coating to said substrate (16) with a gravure cylinder having an indicia depression formed on said gravure cylinder, said indicia depression being adapted to retain said energy curable coating until contact with said substrate whereby said energy curable coating is applied to said substrate

6. The system according to claim 5 further comprising a third station of said plurality of stations configured to apply an overcoat to said substrate (16) over said metallic ink and said energy cured layer.

7. The system according to Claim 5 or 6 wherein said energy beam (34) is an electron beam.

8. The system according to Claim 5 or 6 wherein said energy beam (34) is an ultraviolet beam.

## Patentansprüche

1. Verfahren zur Herstellung eines gedruckten Produkts, wobei das Verfahren folgende Phasen umfasst:
Aufbringung einer strahlenhärtenden Beschichtung auf ein Substrat (16) in einer ersten Station (12) unter Verwendung eines Druckverfahrens, wobei die strahlenhärtende Beschichtung ein Akrylatmaterial umfasst, das durch radikalische Polymerisation aushärtet;
Härten der strahlenhärtenden Beschichtung unter Verwendung eines strahlenhärtenden Verfahrens einschließlich radikalischer Polymerisation in einer zweiten Station (30), die der ersten Station nachgeschaltet ist, um eine ausgehärtete strahlenhärtende Schicht (102) zu definieren;
Weiterleitung des Substrats zu einer dritten Station, die der zweiten Station nachgeschaltet ist; und
Aufbringung einer metallischen Tinte direkt auf die intakte Oberfläche der ausgehärteten strahlenhärtenden Schicht, die aus der ausgehärteten strahlenhärtenden Beschichtung besteht, um eine metallische Tintenschicht (106) auf der ausgehärteten strahlenhärtenden Schicht zu definieren,
**gekennzeichnet dadurch, dass**
die Aufbringung der strahlenhärtenden Beschichtung auf das Substrat (16) in besagter erster Station (12) die Aufbringung der strahlenhärtenden Beschichtung auf das Substrat in besagter erster Station unter Verwendung eines Tiefdruckzylinders mit Indexnuten umfasst, die auf dem Tiefdruckzylinder gebildet sind, wobei die Indexnuten geeignet sind, die strahlenhärtende Beschichtung bis zum Kontakt mit dem Substrat zurückzuhalten, wodurch die strahlenhärtende Beschichtung auf das Substrat aufgebracht wird.

2. Verfahren nach Anspruch 1, das des Weiteren folgendes umfasst: Aufbringung einer Schutzbeschichtung (104) auf das Substrat in einer vierten Station, wobei die Schutzbeschichtung über die metallische Tintenschicht aufgebracht wird.

3. Verfahren nach Anspruch 1 oder 2, wobei besagtes Härten der strahlenhärtenden Beschichtung unter Verwendung des strahlenhärtenden Verfahrens das Härten der strahlenhärtenden Beschichtung unter Verwendung eines Elektronenstrahls in der zweiten Station umfasst, die besagter erster Station nachgeschaltet ist, um die ausgehärtete strahlenhärtende Schicht (102) zu definieren.

4. Verfahren nach Anspruch 1 oder 2, wobei besagtes Härten der strahlenhärtenden Beschichtung unter Verwendung des strahlenhärtenden Verfahrens das Härten der strahlenhärtenden Beschichtung unter Verwendung eines ultravioletten Lichtstrahls in der zweiten Station umfasst, die besagter erster Station nachgeschaltet ist, um die ausgehärtete strahlenhärtende Schicht (102) zu definieren.

5. System zur Bildung eines Indexes auf einem Substrat (16), wobei das System folgendes umfasst:
ein Zufuhrsystem (14) zum Zuführen des Substrats;
eine Vielzahl von Stationen (12) für je eine Verarbeitungsphase für das Substrat,
wobei eine erste der Vielzahl von Stationen konfiguriert ist, um eine strahlenhärtende Beschichtung auf das Substrat anzubringen, unter Verwendung eines Druckverfahrens, wobei die strahlenhärtende Beschichtung ein Akrylatmaterial umfasst, das durch radikalische Polymerisation härtet;
eine Härteeinheit (30), die der ersten Station nachgeschaltet ist und das Substrat empfängt und einen Energiestrahl (34) abgibt, der zu der strahlenhärtenden Beschichtung hin gerichtet ist, zum Härten der strahlenhärtenden Beschichtung durch ein radikalisches Polymerisationsverfahren und zur Bildung einer durch Energie gehärteten Schicht (102) auf dem Substrat; und
eine zweite Station der Vielzahl von Stationen, die konfiguriert ist, um eine metallische Tinte direkt auf die intakte Oberfläche der durch Energie gehärteten Schicht (102) aufzubringen, die aus der ausgehärteten strahlenhärtenden Beschichtung besteht, um eine metallische Tintenschicht (106) auf der ausgehärteten strahlenhärtenden Schicht zu definieren, wobei die Härteeinheit (30) zwischen der ersten und der zweiten Station liegt,
**gekennzeichnet dadurch, dass**
die erste der Vielzahl von Stationen (12) konfiguriert ist, um besagte strahlenhärtende Beschichtung auf das Substrat (16) mit einem Tiefdruckzylinder mit einer Indexvertiefung aufzubringen, die auf dem Tiefdruckzylinder gebildet ist, wobei besagte Indexvertiefung geeignet ist, die strahlenhärtende Beschichtung bis zum Kontakt mit dem Substrat zurückzuhalten, wodurch die strahlenhärtende Beschichtung auf das Substrat aufgebracht wird.

6. System nach Anspruch 5, das des Weiteren folgendes umfasst: eine dritte Station der Vielzahl von Stationen, die konfiguriert ist, um eine Schutzbeschichtung auf das Substrat (16) über die metallische Tinte und die durch Energie gehärtete Schicht aufzubringen.

7. System nach Anspruch 5 oder 6, wobei besagter Energiestrahl (34) ein Elektronenstrahl ist.

8. System nach Anspruch 5 oder 6, wobei besagter Energiestrahl (34) ein ultravioletter Lichtstrahl ist.

## Revendications

1. Procédé pour former un produit imprimé, ledit procédé comprenant:
appliquer un revêtement durcissable par apport d'énergie à un substrat (16) au niveau d'une première station (12) utilisant un procédé d'impression, ledit revêtement durcissable par apport d'énergie comprenant un matériau d'acrylate qui durcit par polymérisation radicalaire;
durcir ledit revêtement durcissable par apport d'énergie utilisant un procédé de durcissement par apport d'énergie comprenant une polymérisation radicalaire au niveau d'une deuxième station (30) en aval de ladite première station pour définir une couche durcissable par apport d'énergie durcie (102);
acheminer ledit substrat vers une troisième station en aval de ladite deuxième station; et
appliquer une encre métallique directement à la surface intacte de ladite couche durcissable durcie par apport d'énergie et, qui consiste en le revêtement durcissable durcie par apport d'énergie, pour définir une couche d'encre métallique (106) sur la couche durcissable durcie par apport d'énergie,
**caractérisé en ce que**
ladite application dudit revêtement durcissable par apport d'énergie audit substrat (16) au niveau de ladite première station (12) comprend l'application dudit revêtement durcissable par apport d'énergie audit substrat au niveau de ladite première station utilisant un cylindre d'héliogravure ayant des rainures de repère formées sur ledit cylindre d'héliogravure, lesdites rainures de repère étant adaptées pour retenir ledit revêtement durcissable par apport d'énergie jusqu'au contact avec ledit substrat de manière que ledit revêtement durcissable par apport d'énergie soit appliqué audit substrat.

2. Procédé selon la revendication 1 comprenant en outre l'application d'une surcouche (104) audit substrat au niveau d'une quatrième station, ladite surcouche étant appliquée au-dessus de ladite couche d'encre métallique.

3. Procédé selon la revendication 1 ou 2 où ledit durcissement dudit revêtement durcissable par apport d'énergie utilisant ledit procédé de durcissement par apport d'énergie comprend le durcissement dudit revêtement durcissable par apport d'énergie utilisant un faisceau d'électrons au niveau de ladite deuxième station en aval de ladite première station pour définir ladite couche durcissable par apport d'énergie durcie (102).

4. Procédé selon la revendication 1 ou 2 où ledit durcissement dudit revêtement durcissable par apport d'énergie utilisant ledit procédé de durcissement par apport d'énergie comprend le durcissement dudit revêtement durcissable par apport d'énergie utilisant un faisceau ultraviolet au niveau de ladite deuxième station en aval de ladite première station pour définir ladite couche durcissable par apport d'énergie durcie (102).

5. Système pour former un repère sur un substrat (16), ledit système comprenant:
un système d'alimentation (14) pour alimenter ledit substrat;
une pluralité de stations (12) pouvant fonctionner chacune pour appliquer une étape de traitement audit substrat, une première de ladite pluralité de stations étant configurée pour appliquer un revêtement durcissable par apport d'énergie audit substrat utilisant un procédé d'impression, ledit revêtement durcissable par apport d'énergie comprenant un matériau d'acrylate qui durcit par polymérisation radicalaire;
une unité de durcissement (30) disposée en aval de ladite première station, ladite unité de durcissement recevant ledit substrat et émettant un faisceau d'énergie (34) dirigé vers ledit revêtement durcissable par apport d'énergie pour durcir ledit revêtement durcissable par apport d'énergie par un procédé de polymérisation radicalaire et former une couche durcie par apport d'énergie résultante (102) sur ledit substrat; et
une deuxième station de ladite pluralité de stations configurée pour appliquer une encre métallique directement à la surface intacte de ladite couche durcie par apport d'énergie (102) qui consiste en le revêtement durcissable par apport d'énergie durci, pour définir une couche d'encre métallique (106) sur la couche durcissable par apport d'énergie durcie, l'unité de durcissement (30) étant située entre la première station et la deuxième station,
**caractérisé en ce que**
ladite première de ladite pluralité de stations (12) est configurée pour appliquer ledit revêtement durcissable par apport d'énergie audit substrat (16) avec un cylindre d'héliogravure ayant une dépression de repère formée sur ledit cylindre d'héliogravure, ladite dépression de repère étant adaptée pour retenir ledit revêtement durcissable par apport d'énergie jusqu'au contact avec ledit substrat de manière à ce que ledit revêtement durcissable par apport d'énergie est appliqué audit substrat.

6. Système selon la revendication 5 comprenant en outre une troisième station de ladite pluralité de stations configurée pour appliquer une surcoucheaudit substrat (16) au-dessus de ladite encre métallique et ladite couche durcie par apport d'énergie.

7. Système selon la revendication 5 ou 6 où ledit faisceau d'énergie (34) est un faisceau d'électrons.

8. Système selon la revendication 5 ou 6 où ledit faisceau d'énergie (34) est un faisceau ultraviolet.
